# DEMANDE DE BREVET EUROPEEN

(11) **EP 0 763 686 A1**
(43) Date de publication de la demande: **19.03.1997**
(21) Numéro de dépôt: 96401947.5
(22) Date de dépôt: 12.09.1996
(51) Int. Cl.: F16L 13/16

(54) **Procédé de réalisation d'un embout, embout et connecteur réalisés par ce procédé et circuit comportant un tel connecteur**

(30) Priorité: 18.09.1995 FR 9510898
(71) Demandeur: HUTCHINSON, F-75008 Paris (FR)
(72) Inventeur: Godeau, Denis, 45260 Vieilles Maisons, Joudry (FR)
(74) Mandataire: Hurwic, Aleksander

(57) **Abrégé**

La présente invention se rapporte principalement à un procédé de réalisation d'un embout, à un embout et à un connecteur réalisé par ledit procédé ainsi qu'à un circuit comportant un tel connecteur.

La mise en oeuvre d'un joint unique selon l'invention assure simultanément l'étanchéité entre une conduite tubulaire et un manchon formant l'embout, ainsi qu'entre les embouts mâle et femelle du connecteur.

La présente invention s'applique à la formation de circuit de fluide, notamment pour l'industrie automobile.

La présente invention s'applique principalement à la réalisation de connecteurs pour circuits de climatisation ou d'huile pour véhicules automobiles.

## Description

La présente invention se rapporte principalement à un procédé de réalisation d'un embout, à un embout et à un connecteur réalisé par ledit procédé ainsi qu'à un circuit comportant un tel connecteur.

Une fuite dans un circuit hydraulique, notamment d'un moteur de véhicule automobile peut avoir des conséquences catastrophiques risquant d'entraîner la destruction du moteur, ou pire, de compromettre la sécurité des occupants du véhicule. Par conséquent, l'industrie automobile utilise des connecteurs pour conduite tubulaire dont la durée de vie est supérieure à celle de l'automobile qui en est équipée. Ces connecteurs donnent généralement satisfaction mais sont d'une construction complexe et par suite d'un prix de revient élevé car ils comportent un nombre important de pièces.

C'est par conséquent un but de la présente invention d'offrir un embout et un connecteur fiables ayant une structure simple.

C'est également le but de la présente invention d'offrir un tel embout présentant un prix de revient modéré.

C'est aussi un but de la présente invention d'offrir un procédé simple et rapide de fabrication d'un embout ou d'un connecteur.

Ces buts sont atteints selon l'invention par la mise en oeuvre d'un joint unique assurant simultanément l'étanchéité entre une conduite tubulaire et un manchon formant l'embout, ainsi qu'entre les embouts mâle et femelle du connecteur.

L'invention a principalement pour objet un procédé de réalisation d'un embout femelle de connexion à une extrémité d'une conduite tubulaire, caractérisé en ce qu'il comporte des étapes consistant à :
a) réaliser un manchon comportant une première zone de fixation sur un tube ayant un diamètre interne sensiblement égal ou légèrement supérieur au diamètre externe du tube, une deuxième zone de réception d'un embout mâle, la deuxième zone ayant un diamètre interne supérieur à celui de la première zone, ainsi qu'une zone de transition entre la première zone et la deuxième zone ;
b) surmouler un joint à l'intérieur du manchon s'étendant de la première zone à la deuxième zone où ledit joint comporte des moyens pour assurer l'étanchéité avec un embout mâle ;
c) enfiler la première zone du manchon sur l'extrémité du tube
d) déformer radialement l'extrémité du tube et/ou le manchon de manière à comprimer le joint entre le tube et le manchon.

L'invention a également pour objet un procédé, caractérisé en ce qu'il comporte entre les étapes a) et b) une étape e) consistant à traiter la surface interne du manchon de manière à favoriser l'adhérence du joint, notamment par dépôt d'un film adhésif.

L'invention a également pour objet un procédé, caractérisé en ce qu'antérieurement à l'étape c), il comporte une étape f) de formation sur le tube d'une collerette dont le diamètre externe est supérieur au diamètre interne de la première zone du manchon et en ce qu'à l'étape c), on enfile le manchon sur le tube jusqu'à ce que l'extrémité de la première zone du manchon repose sur la collerette du tube.

L'invention a également pour objet un procédé, caractérisé en ce qu'à l'étape d), on forme sur le tube, en vis-à-vis de la zone de transition du manchon, une collerette ayant un diamètre externe supérieur au diamètre interne de la première zone du manchon.

L'invention a également pour objet un procédé, caractérisé en ce qu'il comporte les étapes consistant à :
g) réaliser un second manchon ;
h) disposer radialement une conduite tubulaire entre le second manchon et l'extrémité du tube opposée au premier manchon ;
i) déformer radialement l'extrémité du tube et/ou du manchon de manière à comprimer la conduite tubulaire entre le tube et le manchon.

L'invention a également pour objet un procédé, caractérisé en ce qu'il comporte les étapes consistant à :
j) disposer une conduite tubulaire entre les extrémités du manchon et du tube opposées au joint et en ce qu'à l'étape d) la déformation radiale du tube et/ou du manchon assure(nt) la compression de l'extrémité de la conduite tubulaire.

L'invention a également pour objet un embout femelle réalisé par le procédé, caractérisé en ce qu'il comporte un manchon comportant une première zone de fixation sur le tube ayant un diamètre interne sensiblement égal ou légèrement supérieur au diamètre externe du tube, une deuxième zone de réception d'un embout mâle, la deuxième zone ayant un diamètre interne supérieur à celui de la première zone, ainsi qu'une zone de transition entre la première zone et la deuxième zone, en ce que le manchon est muni d'un joint s'étendant de la première zone à la deuxième zone où il comporte des moyens pour assurer l'étanchéité avec un embout mâle et en ce que ledit joint est comprimé entre le tube et la première zone du manchon, de manière à garantir l'étanchéité entre la conduite tubulaire et le manchon.

L'invention a également pour objet un embout, caractérisé en ce qu'il est fixé sur l'extrémité d'une conduite tubulaire comprimée entre le tube et un manchon ou un élément arrière du manchon.

L'invention a également pour objet un embout, caractérisé en ce que le joint est réalisé en élastomère, notamment en EPDM ou en HNBR.

L'invention a également pour objet un embout, caractérisé en ce que le manchon est un manchon métallique, notamment en alliage d'aluminium.

L'invention a également pour objet un embout, caractérisé en ce que le manchon est réalisé en matière plastique.

L'invention a également pour objet un embout, caractérisé en ce que le tube est réalisé en métal, notamment en alliage d'aluminium.

L'invention a également pour objet un embout, caractérisé en ce que le tube est réalisé en matière plastique.

L'invention a également pour objet un connecteur, caractérisé en ce qu'il comporte un embout selon l'invention, et un embout mâle.

L'invention a également pour objet un circuit hydraulique de climatisation d'un véhicule automobile, caractérisé en ce qu'il comporte un connecteur selon l'invention.

L'invention sera mieux comprise au moyen de la description ci-après et des figures annexées données comme des exemples non limitatifs et sur lesquels :
- la figure 1 est une vue en coupe longitudinale de l'extrémité d'une conduite tubulaire destinée à recevoir un manchon formant embout de la figure 2 ;
- la figure 2 est une vue en coupe longitudinale d'un manchon formant embout femelle muni d'un joint d'étanchéité ;
- la figure 3 est une vue en coupe longitudinale illustrant la mise en place de l'embout sur l'extrémité de la conduite tubulaire ;
- la figure 4 est une vue en coupe longitudinale d'un premier exemple de réalisation d'un embout assemblé ;
- la figure 5 est une vue en coupe longitudinale d'un deuxième exemple de réalisation d'un embout assemblé ;
- la figure 6 est une vue en coupe longitudinale d'un troisième exemple de réalisation d'un embout assemblé ;
- la figure 7 est une vue en coupe longitudinale d'un quatrième exemple de réalisation d'un embout assemblé.

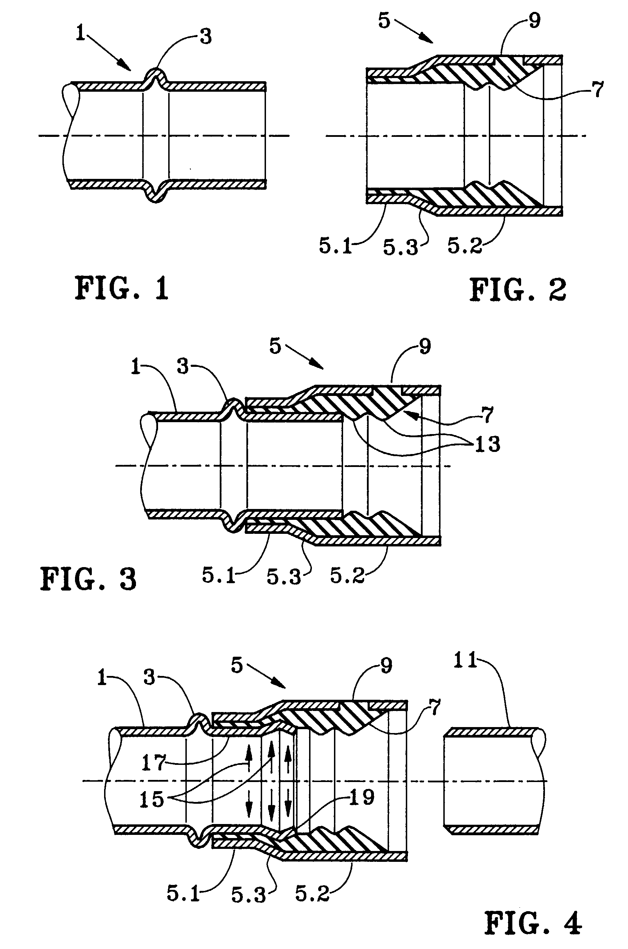

Sur les figures 1 à 7, on a utilisé les mêmes références pour désigner les mêmes éléments.

Sur la figure 1, on peut voir l'extrémité d'un tube 1 présentant une bonne résistance à l'écrasement, par exemple d'un tube métallique en acier ou en aluminium, que l'on veut munir d'un embout. On introduit par l'extrémité du tube 1 un outil assurant, par déformation plastique de la paroi du tube, la formation d'une collerette 3.

Sur la figure 2, on peut voir un manchon formant un embout femelle 5, par exemple en aluminium, comprenant une première zone cylindrique ayant un diamètre interne sensiblement égal ou légèrement supérieur au diamètre externe du tube 1 mais inférieur au diamètre de la collerette 3, une zone 5.2 de réception d'un embout mâle ayant un diamètre supérieur à celui de la zone 5.1 de fixation sur le tube 1, ainsi qu'une zone 5.3 de transition, par exemple tronconique, entre les zones 5.1 et 5.2. L'embout 5 est muni d'un joint 7 surmoulé, par exemple en élastomère, de préférence de type EPDM ou HNBR s'étendant de manière continue dans les trois zones 5.1, 5.3 et 5.2. Le joint 7 est par exemple formé en disposant le manchon 5 dans un moule et en injectant l'élastomère par une ouverture radiale 9. Les surfaces internes du manchon peuvent au préalable avoir reçu un traitement de surface, notamment le dépôt d'un adhésif, améliorant la fixation du joint sur l'embout. La surface de contact du joint 7 avec un embout mâle 11 (figure 4) peut comporter des lèvres d'étanchéité ou, comme illustré, des boulets 13.

Comme on peut le voir sur la figure 3, on enfile le manchon 5 sur la conduite 1 jusqu'à ce que l'extrémité de la zone 5.1 prenne appui sur la collerette 3. On introduit un outil (non représenté) par la zone 5.2 et on assure une expansion plastique radiale du tube selon les flèches 15 assurant la formation d'une zone cylindrique 17 se terminant du côté de l'extrémité du tube par une collerette 19 située au moins en partie en vis-à-vis de la zone tronconique 5.3 du manchon 5. L'élastomère du joint 7 se trouve comprimé entre le manchon 5 et la paroi du tube déformé. La zone 5.1 du manchon 5 se trouve immobilisée axialement entre les collerettes 3 et 19 du tube 1. En variante, l'outil déforme plastiquement le manchon 5 en direction de l'axe. On peut raccorder l'embout selon l'invention à un embout mâle 11, par exemple disposé à l'extrémité d'une conduite tubulaire flexible, ou d'un organe du véhicule.

Dans ce cas, le joint 7 assure le confinement hermétique du fluide dans le circuit en empêchant les fuites au niveau de la zone de contact avec l'embout mâle 11, en vis-à-vis de la zone 5.2 du manchon formant embout femelle 5, ainsi qu'entre le tube 1 et les zones 5.1 et 5.3 du manchon 5.

L'embout selon la présente invention forme avec l'embout mâle 11 un connecteur qui peut avantageusement être équipé des moyens de verrouillage, avantageusement des moyens de verrouillage rapide, comme par exemple les moyens de verrouillage par bague décrit dans la Demande de Brevet FR 94 02505, publiée sous le N° 2 717 883, ou des dispositifs de verrouillage par épingle décrits dans le Brevet FR 92 09947, publié sous le N° 2 694 797.

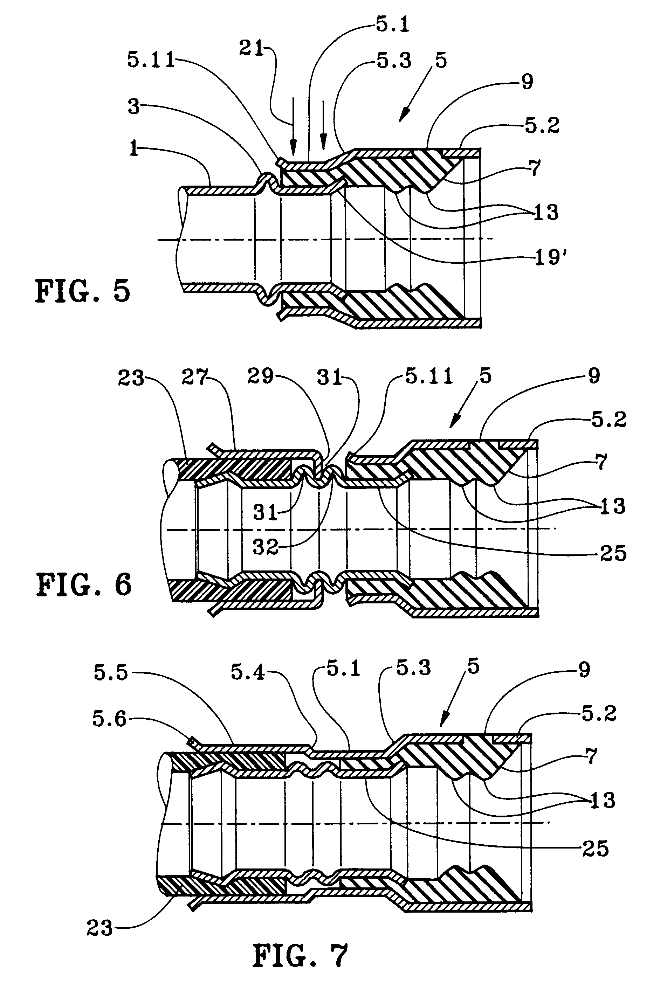

Dans la variante illustrée sur la figure 5, l'extrémité de la zone 5.1 du manchon 5 comporte une portée tronconique 5.11. L'extrémité du tube 1 comporte un évasement 19' dont le diamètre externe est sensiblement égal à celui de la collerette 3. On enfile le manchon 5 sur la conduite tubulaire 1 jusqu'à ce que la portée prenne appui sur la collerette 3, et on assure avec un outil de serrage (non représenté) la constriction radiale de la zone 5.1 du manchon 1 selon les flèches 21. L'élastomère du joint 7 se trouve comprimé entre la zone 5.1 déformée du manchon 5 et la paroi du tube 1. La zone 5.1 du manchon 5 se trouve immobilisée axialement entre la collerette 3 et l'évasement 19' du tube 1.

Sur la figure 6, on peut voir une variante de réalisation de l'embout selon la présente invention susceptible d'être fixé à l'extrémité d'une conduite tubulaire 23 ne présentant pas une résistance à l'écrasement suffisante pour permettre la compression du joint 7. La conduite 23 est par exemple une conduite tubulaire flexible en matière plastique souple ou en élastomère. Un manchon 5 est fixé sur un tube intermédiaire 25 par mandrinage analogue à celui pratiqué dans l'exemple des figures 1 à 4 ou, avantageusement, par sertissage analogue à celui pratiqué dans l'exemple de la figure 5. La conduite tubulaire 23 est enfilée sur le tube intermédiaire 25 et est comprimée entre ledit tube intermédiaire 25 et une pièce de compression 27 avantageusement externe. Dans l'exemple illustré, le tube 23 est comprimé par sertissage en direction de l'axe d'un manchon 27 dont l'extrémité orientée vers le manchon 5 comporte un rebord radialement interne 29 destiné à se loger dans une gorge radiale 31 délimitée par deux collerettes 3.1 et 3.2. La compression de la conduite tubulaire 23 entre le tube intermédiaire 25 et le manchon 27 assure simultanément l'étanchéité et l'immobilisation axiale et par suite la fixation du dispositif selon la présente invention à l'extrémité de la conduite tubulaire 23.

Sur la figure 7, on peut voir une variante avantageuse comportant un manchon 5 long muni d'une zone 5.5 de compression de la conduite tubulaire 23 terminée à une première extrémité par évasement 5.6 et à l'extrémité opposée d'une zone de transition 5.4, par exemple tronconique, vers la zone 5.1. Un mandrinage ou, avantageusement, un sertissage unique, permet en une seule opération de déformer plastiquement les zones 5.1 et 5.5 du manchon 5 ou les zones se trouvant en vis-à-vis du tube intermédiaire 25 de manière à comprimer le joint 7 ainsi que la conduite tubulaire 23.

La présente invention s'applique à la formation de circuit de fluide, notamment pour l'industrie automobile.

La présente invention s'applique principalement à la réalisation de connecteurs pour circuits de climatisation ou d'huile pour véhicules automobiles.

## Revendications

1. Procédé de réalisation d'un embout femelle de connexion à une extrémité d'une conduite tubulaire (1, 23), caractérisé en ce qu'il comporte des étapes consistant à :
a) réaliser un manchon (5) comportant une première zone (5.1) de fixation sur un tube (1, 23) ayant un diamètre interne sensiblement égal ou légèrement supérieur au diamètre externe du tube (1, 23), une deuxième zone (5.3) de réception d'un embout mâle (11), la deuxième zone ayant un diamètre interne supérieur à celui de la première zone (5.1), ainsi qu'une zone de transition (5.3) entre la première zone (5.1) et la deuxième zone (5.2) ;
b) surmouler un joint (7) à l'intérieur du manchon (5) s'étendant de la première zone (5.2) à la deuxième zone (5.1) où ledit joint (7) comporte des moyens (13) pour assurer l'étanchéité avec un embout mâle (11) ;
c) enfiler la première zone (5.1) du manchon (5) sur l'extrémité du tube (1,25) ;
d) déformer radialement l'extrémité du tube (1, 25) et/ou le manchon (5) de manière à comprimer le joint (7) entre le tube (1, 25) et le manchon (5).

2. Procédé selon la revendication 1, caractérisé en ce qu'il comporte entre les étapes a) et b) une étape e) consistant à traiter la surface interne du manchon (5) de manière à favoriser l'adhérence du joint (7), notamment par dépôt d'un film adhésif.

3. Procédé selon l'une quelconque des revendications précédentes, caractérisé en ce qu'antérieurement à l'étape c), il comporte une étape f) de formation sur le tube (1, 25) d'une collerette (3, 3.1, 3.2) dont le diamètre externe est supérieur au diamètre interne de la première zone (5.1) du manchon (5) et en ce qu'à l'étape c), on enfile le manchon (5) sur le tube (1, 25) jusqu'à ce que l'extrémité de la première zone (5.1) du manchon (5) repose sur la collerette (3, 3.2) du tube (1, 25).

4. Procédé selon l'une quelconque des revendications précédentes, caractérisé en ce qu'à l'étape d), on forme sur le tube (1, 25), en vis-à-vis de la zone (5.3) de transition du manchon (5), une collerette (19) ayant un diamètre externe supérieur au diamètre interne de la première zone (5.1) du manchon (5).

5. Procédé selon l'une quelconque des revendications précédentes, caractérisé en ce qu'il comporte les étapes consistant à :
g) réaliser un second manchon (27) ;
h) disposer radialement une conduite tubulaire (23) entre le second manchon (27) et l'extrémité du tube (25) opposée au premier manchon (5) ;
i) déformer radialement l'extrémité du tube (25) et/ou du manchon (27) de manière à comprimer la conduite tubulaire (23) entre le tube (25) et le manchon (27).

6. Procédé selon l'une quelconque des revendications 1 à 4, caractérisé en ce qu'il comporte les étapes consistant à :
j) disposer une conduite tubulaire (23) entre les extrémités du manchon (5) et du tube (25) opposées au joint (7) et en ce qu'à l'étape d) la déformation radiale du tube (25) et/ou du manchon (5) assure(nt) la compression de l'extrémité de la conduite tubulaire (23).

7. Embout femelle réalisé par le procédé selon l'une quelconque des revendications précédentes, caractérisé en ce qu'il comporte un manchon (5) comportant une première zone (5.1) de fixation sur le tube (1, 25) ayant un diamètre interne sensiblement égal ou légèrement supérieur au diamètre externe du tube (1, 25), une deuxième zone (5.2) de réception d'un embout mâle (11), la deuxième zone ayant un diamètre interne supérieur à celui de la première zone (5.1), ainsi qu'une zone de transition (5.3) entre la première zone et la deuxième zone, en ce que le manchon (5) est muni d'un joint (7) s'étendant de la première zone (5.1) à la deuxième zone (5.2) où il comporte des moyens (13) pour assurer l'étanchéité avec un embout mâle (11) et en ce que ledit joint (7) est comprimé entre le tube (1, 25) et la première zone (5.1) du manchon (5), de manière à garantir l'étanchéité entre la conduite tubulaire (1, 25) et le manchon (5).

8. Embout selon la revendication 7, caractérisé en ce qu'il est fixé sur l'extrémité d'une conduite tubulaire (23) comprimée entre le tube (25) et un manchon (27) ou un élément arrière (5.5) du manchon (5).

9. Embout selon les revendications 7 à 8, caractérisé en ce que le joint (7) est réalisé en élastomère, notamment en EPDM ou en HNBR.

10. Embout selon la revendication 7, 8 ou 9, caractérisé en ce que le manchon (5) est un manchon métallique, notamment en alliage d'aluminium.

11. Embout selon la revendication 7, 8 ou 9, caractérisé en ce que le manchon (5) est réalisé en matière plastique.

12. Embout selon la revendication 7, 8, 9, 10 ou 11, caractérisé en ce que le tube (1, 25) est réalisé en métal, notamment en alliage d'aluminium.

13. Embout selon la revendication 7, 8, 9, 10 ou 11, caractérisé en ce que le tube (1, 25) est réalisé en matière plastique.

14. Connecteur, caractérisé en ce qu'il comporte un embout selon l'une quelconque des revendications 7 à 12, et un embout mâle (11).

15. Circuit hydraulique de climatisation d'un véhicule automobile, caractérisé en ce qu'il comporte un connecteur selon la revendication 14.
